# EUROPEAN PATENT SPECIFICATION

(11) **EP 2 355 583 B1**
(45) Date of publication and mention of the grant of the patent: **19.04.2017**
(21) Application number: 10152962.6
(22) Date of filing: 08.02.2010
(51) Int. Cl.: H04W 48/10, H04W 48/18

(54) **A method for transmitting beacon services to user equipments**
Verfahren zur Übertragung von Baken-Diensten an Benutzergeräte
Procédé de transmission de services de balises à des équipements utilisateur

(43) Date of publication of application: 10.08.2011
(73) Proprietor: NEC Corporation, Minato-ku Tokyo 108-8001 (JP)
(72) Inventor: Zappulla, Fabrice, 95600 Eaubonne (FR)
(74) Representative: Ilgart, Jean-Christophe

(56) References cited:
- US-A1- 2009 239 530
- CORDIER P ET AL: "E2R Cognitive Pilot Channel Concept" INTERNET CITATION 1 June 2006 (2006-06-01), XP002458110 Retrieved from the Internet: URL:http://e2r2.motlabs.com/dissemination/ conferences/E2RII_45_IST06_Paper.p [retrieved on 2007-11-09]
- JORDI PEREZ-ROMERO ET AL: "A Novel On-Demand Cognitive Pilot Channel Enabling Dynamic Spectrum Allocation" NEW FRONTIERS IN DYNAMIC SPECTRUM ACCESS NETWORKS, 2007. DYSPAN 2007. 2ND IEEE INTERNATIONAL SYMPOSIUM ON, IEEE, PI, 1 April 2007 (2007-04-01), pages 46-54, XP031095601 ISBN: 978-1-4244-0663-0
- HOUZE P ET AL: "Common Pilot Channel for Network Selection" IEEE VEHICULAR TECHNOLOGY CONFERENCE, XX, XX, 8 May 2006 (2006-05-08), pages 67-71, XP002411303

## Description

### TECHNICAL DOMAIN

The invention pertains to telecommunication field and concerns a method for optimally controlling the tuning of a User Equipments (UE's) to beacon channels transporting at least first beacon messages and second beacon messages, said User Equipments (UE's) roaming in an area comprising a plurality of geographical meshes, each mesh being covered by at least one RAT among a plurality of RATs using several frequencies, said User Equipment (UE) having various RAT capabilities and preferences and supporting several frequencies.

The method comprises the steps of:
- broadcasting, in the first beacon messages, reference information describing all the RAT's deployed in said area or a single mesh of said area, and all the frequencies used in said area,
- broadcasting in the second beacon messages, specific information to be combined with said reference information for describing RAT's deployed in a specific mesh of said area and frequencies used in said specific mesh,

The invention also concerns a base station for transmitting services to User Equipments (UE's) in an area covered by several Radio Access Technologies (RAT's) using several frequencies, said area comprising a plurality of geographical meshes, each mesh being covered by at least one RAT among said plurality of RAT's and each User Equipment (UE) having various RAT capabilities and preferences and supporting several frequencies.

The invention further concerns a User Equipment (UE) having various RAT capabilities and preferences for receiving said beacon services transmitted by said base station.

### STATE OF PRIOR ART

A user roaming in an area covered by several telecommunication networks may choose an operator, a RAT (Radio Access Technology), and/or a frequency of communication based on roaming agreements between operators in this area and on the capabilities and preferences of its User Equipment (UE).

Cognitive Pilot Channel (CPC) is a kind of Beacon channel that may be used in cognitive radio to provide information to cognitive mobiles about the available operators, Radio Access Technologies (RAT) and Frequencies available in said geographical area.

Two Major concepts for Cognitive Pilot Channel are proposed by the E3 project and ETSI RRS Group i.e., Mesh based and Optimized broadcast approach.

In Mesh based concept, a cell in the geographical area is divided into a plurality of meshes and information is provided about operators, RAT and Frequencies available in each mesh.

In Optimized broadcast concept, information about all the RATs and frequencies available in the cells is broadcast in said geographical area.

Although Mesh based concept is more precise than Optimized broadcast concept, it presents a drawback resulting from the fact that the transmission of information to the meshes requires a larger frequency band to be allocated to CPC.

One of the proposed methods to reduce the CPC data rate consists of transmitting the same CPC for the whole cell with the coverage area for each technology and frequency. The problem with this kind of approach is that coverage areas are not easily characterized and transmitting a detailed coverage area may result in a large data-rate as well.

The present invention aims at improving the effectiveness of data capture for Beacon channels. The invention also aims at improving the UE's power saving by optimizing the UE's radio use.

### PRESENTATION OF THE INVENTION

The invention is based on the idea of broadcasting different beacon channels transporting different beacon messages in a geographical area comprising a plurality of meshes covered by different Radio Access Technologies (RAT's) using different frequencies, said beacon messages indicating to UEs roaming in said area the RAT's and the frequencies available in each mesh of said area.

The object of the invention is achieved by means of a method for optimally controlling the tuning of a User Equipments (UE's) to beacon channels transporting at least first beacon messages and second beacon messages, said User Equipments (UE's) roaming in an area comprising a plurality of meshes, each mesh being covered by at least one RAT among a plurality of RATs using several frequencies, said User Equipment (UE) having various RAT capabilities and preferences and supporting several frequencies.

Said method comprising the steps of:
- broadcasting in the first beacon message reference information describing all the RAT's deployed in said area or meshes, and all the frequencies used in said area,
- broadcasting in the second beacon messages specific information to be combined with said reference information for describing RATs deployed in a specific mesh of said area and frequencies used in said specific mesh.

According to the invention, said method further comprises the step of including in each first beacon message the geographical position of said area, the time-stamps of transmission, respectively, of the next first beacon message and of the first second beacon message broadcasted in said area.

Preferably each of said first beacon messages and each of said second beacon messages comprises n successive fields, and each i^{th} field i (i= 1 to n) of each first beacon message contains an identifier of a particular RAT or a value of a particular frequency available in the area covered by the CPC channel, and each i^{th} field i (i= 1 to n) of each second beacon message contains a data used to indicate to the UE located in a given mesh whether or not the i^{th} particular RAT or the i^{th} particular frequency is available in said given mesh.

Preferably, all the second beacon messages have the same size and all the meshes of said geographical area have the same shape and the same size.

In a preferred embodiment of the invention, each first beacon message comprises data indicating the geographical position and the size of the mesh to which said second beacon message are intended, and each second beacon message comprises an identification number of each first beacon message.

In normal operation, a UE located in a mesh of said geographical area utilizes a RAT and a frequency available in said mesh and listens to the first and second beacon messages in order to switch, where appropriate, to a better RAT and/or to a better frequency. The switching should be made automatically and transparently to the user.

The later stores the reference information and the specific information to be combined with said reference information, decodes the second beacon message containing data relating to the mesh where it is currently located, stores said data, and selects a new RAT and/or a new frequency in said mesh.

The method according to the invention is implemented by means of a base station for transmitting services to User Equipments in an area comprising a plurality of geographical meshes covered by several Radio Access Technologies (RAT's) using several frequencies, each mesh being covered by at least one RAT among said plurality of RAT's and each User Equipment (UE) having various RAT capabilities and preferences and supporting several frequencies.

The base station according to the invention comprises:
- means for broadcasting in the first beacon messages, reference information describing all the RAT's deployed in said area or mesh, and all the frequencies used in said area or mesh,
- means for broadcasting in the second beacon messages specific information to be combined with said reference information for describing RAT's deployed in a specific mesh of said area and frequencies used in said specific mesh, said base station further comprises means for including in each first beacon message the geographical position of said specific mesh, the time-stamps of transmission, respectively, of a first message and a second message intended to said specific mesh.

Document ["E2R Cognitive Pilot Channel", June 1, 2006 (2006-06-01), XP002458110] discloses a method for Cognitive Pilot Channel, encompressing both in-band/out band and downlink/uplink functionalities. The out-band CPC provides information to a mobile terminal so as it can initiate a communication session.

Document ["A novel on-command Cognitive Pilot Channel ennabling dynamic spectrum allocation" DYSPAN 2007. April 1, 2007 (2007-04-01) XP 031095601] discloses how CPC information can be delivered to the terminals. Particularly, this document describes the use of an on-demand CPC in which the information is only transmitted after a request from a mobile terminal.

Document ["Common Pilot Channel fot network selection", IEEE VEHICULAR TECHNOLOCY CONFERENCE May 8, 2006 (2006-05-08), XP 002411303] discloses a method in which a CPC information is transmitted from a single database so that consistency is insured for meshes included in two adjacent CPC areas.

Document US 2009/0239530 A1 discloses a method for establishing a connection in a radio communication system in which a user terminal selects an operator radio communication system in a country-specific pilot Channel.

### BRIEF DESCRIPTION OF THE FIGURES

The forgoing summary, as well as the following detailed description, will be better understood when read in conjunction with the appended figures illustrating an exemplary embodiment of the invention in which:
- figure 1 schematically represents a mapping of meshes of an area in which reference and delta messages are broadcasted according to the invention,
- figure 2 schematically illustrates a first embodiment of the transmission schedule of the reference and delta messages according to the invention,
- figure 3 schematically illustrates a second embodiment of the transmission schedule of the reference and delta messages according to the invention,
Dij representing difference between a reference Ri, and messages intended for a specific mesh.

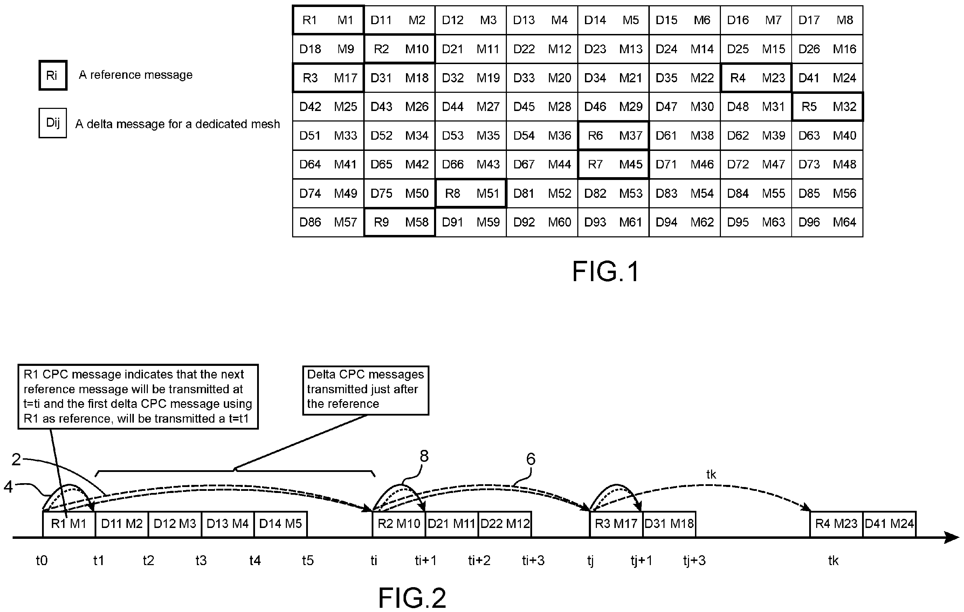

Referring now to figure 1, it is assumed that a UE is camping on the mesh M24 of the geographical area and the operator transmits a reference message R1 mesh M1, a reference message R2 mesh M10, a reference message R3 mesh M17, a reference message R4 mesh M23, a reference message R5 mesh M32, a reference message R6 mesh M37, a reference message R7 mesh M45, a reference message R8 mesh M51, and a reference message R9 mesh M58.

It is also assumed that the operator uses the differential coding according to which only delta messages Dij are transmitted to meshes following a i^{th} mesh that have received the i^{th} reference message Ri.

For example, mesh M2 receives delta messages D11 transporting additional information compared to reference message R1, mesh M3 receives delta messages D12 transporting additional information compared to reference message R1, ...., mesh M9 receives delta messages D18 transporting additional information compared to reference message R1, mesh M11 receives delta messages D21 transporting additional information compared to reference message R2...., mesh M18 receives delta messages D31 transporting additional information compared to reference message R3...., mesh M22 receives delta messages D35 transporting additional information compared to reference message R3, and so on.It is to be noted that a delta messages may be derived from another delta message. In this case, the UE stores all the delta messages to reconstruct the RAT and frequency information intended to the mesh where it is currently camping.

According to the invention, in addition to information describing all the RAT's deployed in said area and all the frequencies used in said area, each reference message Ri comprises the geographical position of said area, the time-stamps of transmission, respectively, of the first next beacon message transporting reference information and of the delta beacon message intended to the mesh where the UE is camping so that the UE decode only reference message Ri and remains in idle state during transmission of messages Dij.

In the example of figure 1, if the UE is camping on mesh 24, without the method of the invention, it will decode all the messages transmitted to the meshes M1 to mesh M23. But, the information that enables the UE to know which RAT and which frequencies are deployed on mesh 24 where it is currently camping is transmitted only in reference message R4 received in mesh M23. The UE have unnecessarily mobilized the radio resources to receive all the messages transmitted in meshes M1 to M22.

Thanks to the invention, the UE will listen only to the messages R1, R2, R3 and R4 because only these messages transport the geographical position of the area where the UE is currently roaming and to which a reference message and a specific message may be used by the terminal to determine the time-stamps of transmission of the next beacon messages.

In the example of figure 1, the UE decodes reference message R4 and specific message D41 to determine the RAT and the frequencies deployed on mesh 24.

Figure 2 illustrates a first embodiment of the invention in which transmission of each reference message Ri in a given area is followed immediately by transmission of delta messages Dij concerning the meshes of said area.

In this embodiment, reference message R1 indicates (arrow 2) the time ti of transmission of the next reference message R2 and the time t1 of transmission of the first delta message using said reference message R1 as reference (arrow 4), reference message R2 indicates the time tj of transmission of the next reference message R3 (arrow 6) and the time tᵢ₊₁ of transmission of the first delta message using said reference message R2 as reference (arrow 8), reference message R3 indicates the time tk of transmission of the next reference message R4 and the time tⱼ₊₁ of transmission of the first delta message using said reference message R3 as reference (arrow), and so on....

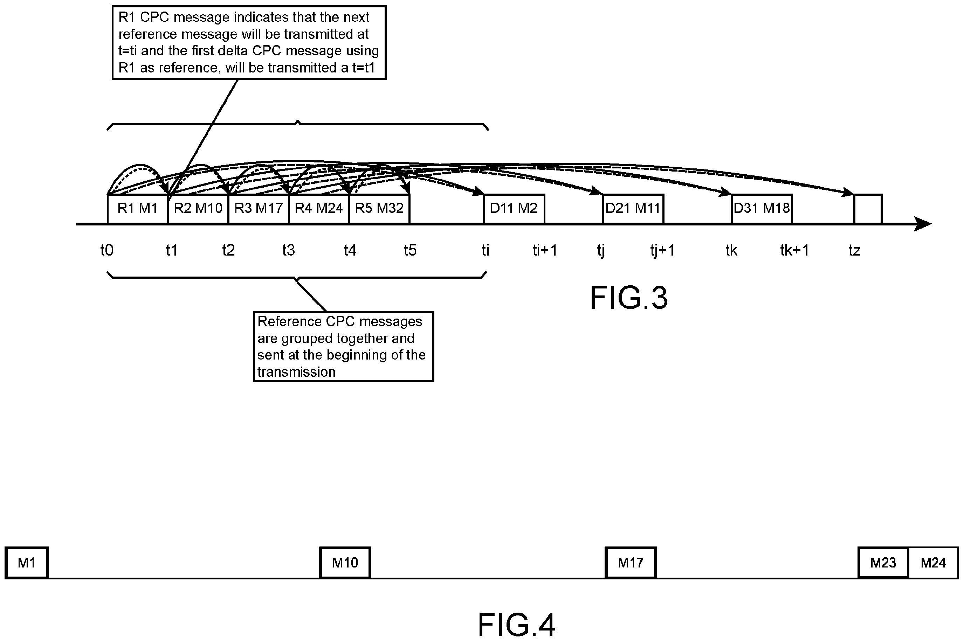

Figure 3 illustrates a SECOND embodiment of the invention in which reference messages Ri are broadcast together in a single stream prior to transmission of only delta messages Dij.

As in the first embodiment, each reference message Ri indicates the time ti of transmission of the next reference message Rᵢ₊₁ and the time tj of transmission of the first delta message using said reference message Ri as reference.

In both embodiments, the UE decodes a reference message, reads the information concerning the RAT's deployed in the area where it is roaming, and all the frequencies used in said area, stores said information and determines whether or not it is concerned with the geographical information, and reads the time-stamps included in said reference message to determine the idle time.

If the geographical information relates to the roaming area of the UE, then said UE determines its own position relative to the geographical position of the mesh having received the reference message and goes into idle mode until transmission of delta message transporting specific information for the mesh where it is currently camping.

Figure 4 schematically illustrates the use of the radio resources in the example of figure 1. The UE will listen only to messages related to meshes M1, M10, M17, and M23 to M24.

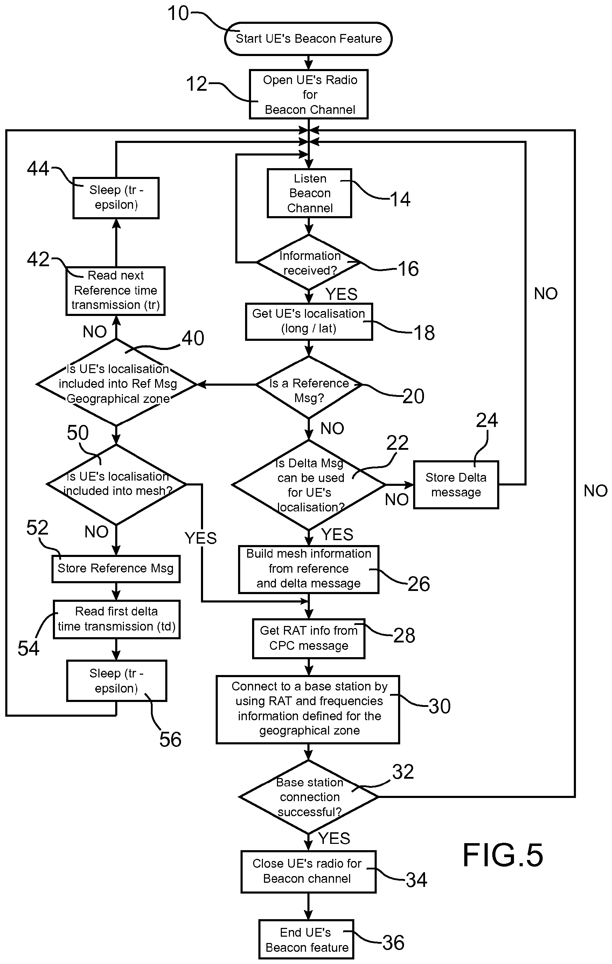

Figure 5 illustrates the steps of the method according to the invention.

A step 10, the UE's Beacon features are initialized.

At step 12, the UE's Radio resources are open for receiving Beacon Channels broadcast by the operator.

At step 14, the UE listens to Beacon Channels and checks, at step 16, whether Beacon information are broadcast in its roaming area or not.

If it is not the case, the UE continues to listen (step 14).

Else, the UE determines, at step 18, its geographical position within the roaming area by means of a GPS (Global positioning System) for example.

At step 20, the UE checks whether the received information comprises reference messages Ri or not.

If the received information comprises a delta message Di, the UE checks, at step 22, whether a delta message may be used for determining said geographical position or not. The UE verifies that it received the reference message and the delta messages by which it determines the RATS deployed in the mesh where it is currently camping.If not, the UE stores the delta message at step 24 and go back to step 14.

Else, at step 26, the UE builds mesh information from reference and delta message, get RAT and frequencies information intended to the mesh where it is currently camping from CPC message, at step 28, and connects, at step 30, to a base station by using the RAT and the frequencies determined at step 28.

If the connection to the base station is successful (step 32), the UE closes the Radio resources for Beacon messages (step 34) and closes its Beacon channels (step 36).

Else in the case where the connection is unsuccessful, the UE continues to listen to the Beacon channel (step 14).

If the information received at step 20 comprises reference messages Ri, the UE checks, at step 40, whether or not its geographical position is within the area targeted by the reference message.

If the UE is not located in the area concerned with the reference message received at step 20, the UE reads the time transmission of the next reference message (step 42), falls automatically into an idle state (step 44), and goes back to step 14.

If the UE is located in the area concerned with the reference message received at step 20, it checks, at step 50, whether or not its geographical position is within the mesh indicated in the reference message.

If so, the process continues from step 28.

Else, at step 52, the UE stores the reference message received at step 20, reads, at step 54, the transmission time of the first delta message, falls automatically into an idle state (step 56), and goes back to step 14.

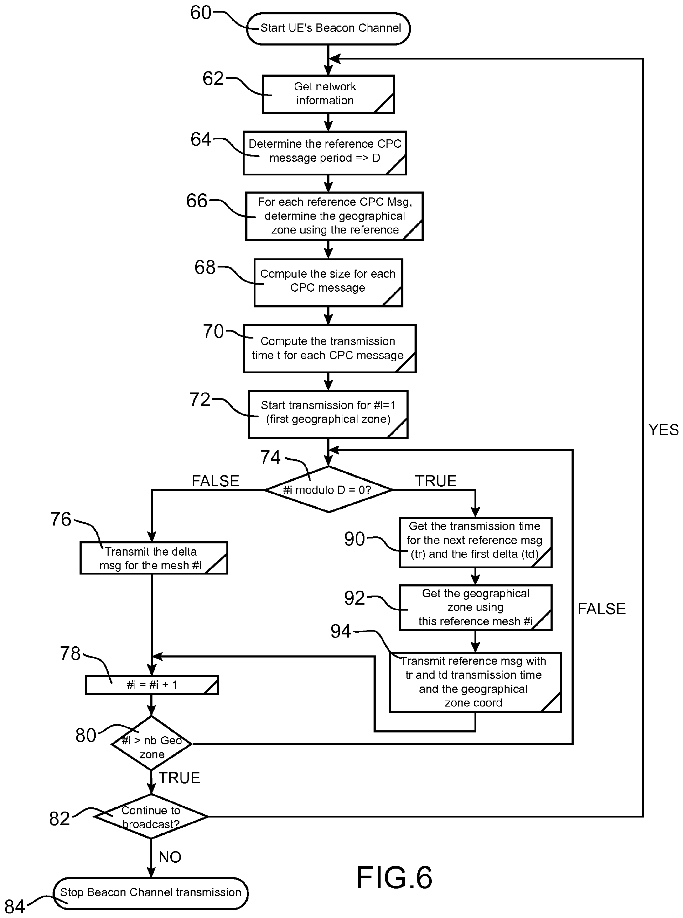

Referring now to figure 6, the Beacon channel broadcasting starts at step 60.

At step 62, the operator gets the Network information and, at step 64, determines the reference CPC message period D.

At step 66, for each CPC reference message, the geographical area using said message is determined.

At step 68, the size of each CPC message is computed, and, at step 70, the transmission time t of each CPC message is computed.

At step 74, the reference CPC message period D is checked.

If said period is not over, the delta message is transmitted for mesh i, i=1 to n, n=64 in the example of figure 1.

At step 78, i is incremented.

At step 80, it is checked whether i is greater than the total number of meshes in the area or not.

If i is less than the total number of meshes in the area, the process continues from step 74.

Else, at step 82, the operator checks whether the broadcasting must continue or not.

If the broadcasting must continue, the process continues from step 62.

Else, the transmission of CPC messages is stopped at step 84.

If the period is over, the transmission time tr for the next reference message and the transmission time td for the first delta message are obtained at step 90, and the geographical area using said reference message is obtained at step 92.

At step 94, the reference message comprising the geographical area coordinates, the transmission time td, and the transmission time Tr is broadcasted.

## Claims

1. A method for optimally controlling tuning of a User Equipment , further referred to as UE, to a beacon channel transporting at least a first beacon message and a second beacon message, said UE roaming in an area comprising a plurality of meshes, each mesh being covered by at least one Radio Access Technology, RAT, among a plurality of RATs using several frequencies, said UE having various RAT capabilities and preferences and supporting several frequencies,
said method comprising the steps of:
- broadcasting, in the first beacon message, reference information describing all the RATs deployed in said area and all the frequencies used in said area,
- broadcasting in the second beacon message specific information to be combined with said reference information for describing a RAT deployed in a specific mesh of said area and a frequency used in said specific mesh said method comprising including in the first beacon message a geographical position of said area and time-stamps of transmission for a next first beacon message and for the second beacon message broadcasted in said area.

2. A method according to claim 1, wherein each of said first beacon message and said second beacon message comprises n successive fields, and wherein each field i, i=1 to n, of the first beacon message contains an identifier of an i^{th} particular RAT or a value of an i^{th} particular frequency available in the area covered by the Cognitive Pilot Channel, CPC, and each field i , i=1 to n, of the second beacon message contains data used to indicate to the UE located in a given mesh whether or not the i^{th} particular RAT or the i^{th} particular frequency is available in said given mesh.

3. A method according to claim 2, wherein all the second beacon messages have the same size, and wherein the first beacon message comprises data indicating the geographical position and a size of the mesh to which said second beacon message is intended.

4. A method according to claim 2, wherein all the meshes of said geographical area have the same shape and the same size.

5. A method according to claim 1, wherein the second beacon message comprises an identification number of the first beacon message.

6. A method according to claim 1, wherein the UE stores the reference information and the specific information to be combined with said reference information, decodes the second beacon message containing data relating to a mesh where the UE is currently located, stores said data, and selects a new RAT and/or a new frequency in said mesh.

7. A base station for transmitting services to a User Equipement, UE, in an area covered by several Radio Access Technologies, RATs, using several frequencies, said area comprising a plurality of geographical meshes, each mesh being covered by at least one RAT among said plurality of RATs and the UE having various RAT capabilities and preferences and supporting several frequencies, said base station comprising:
- means for broadcasting in a first beacon message, reference information describing all the RATs deployed in said area, and all the frequencies used in said area,
- means for broadcasting in a second beacon message specific information to be combined with said reference information for describing a RAT deployed in a specific mesh of said area and a frequency used in said specific mesh, said base station comprising means for including in the first beacon message a geographical position of said area and time-stamps of transmission for a next first message and for the second beacon message intended to said specific mesh.

8. A base station according to claim 7, wherein said User Equipment having various RAT capabilities and preferences is configured for receiving beacon services transmitted by the base station.

## Patentansprüche

1. Verfahren zur optimalen Steuerung der Abstimmung eines Benutzergeräts, auf das ferner als UE Bezug genommen wird, auf einem Beacon-Kanal, der wenigstens eine erste Beacon-Nachricht und eine zweite Beacon-Nachricht transportiert, wobei das UE-Roaming in einem Bereich erfolgt, der mehrere Maschen aufweist, wobei jede Masche durch wenigstens eine Funkzugangstechnologie RAT von mehreren RATs, die mehrere Frequenzen verwenden, abgedeckt wird, wobei das UE verschiedene RAT-Fähigkeiten und Präferenzen hat und mehrere Frequenzen unterstützt,
wobei das Verfahren die folgenden Schritte aufweist:
- Rundsenden von Referenzinformationen, die alle RATs, die in dem Bereich eingesetzt sind, und alle Frequenzen, die in dem Bereich verwendet werden, beschreiben, in der ersten Beacon-Nachricht,
- Rundsenden von spezifischen Informationen, die mit den Referenzinformationen kombiniert werden sollen, zum Beschreiben einer RAT, die in einer spezifischen Masche des Bereichs eingesetzt wird, und einer Frequenz, die in der spezifischen Masche verwendet wird, in der zweiten Beacon-Nachricht,
wobei das Verfahren das Aufnehmen einer geographischen Position des Bereichs und von Zeitstempeln der Übertragung für eine nächste erste Beacon-Nachricht und für die zweite Beacon-Nachricht, die in dem Bereich rundgesendet werden, in die erste Beacon-Nachricht umfasst.

2. Verfahren nach Anspruch 1, wobei jede der ersten Beacon-Nachricht und der zweiten Beacon-Nachricht n aufeinanderfolgende Felder aufweist, und wobei jedes Feld i, i =1 bis n, der ersten Beacon-Nachricht eine Kennung einer i-ten bestimmten RAT oder eines Werts einer i-ten bestimmten Frequenz enthält, die in dem Bereich verfügbar ist, der von dem kognitiven Pilotkanal CPC abgedeckt wird, und jedes Feld i, i = 1 bis n, der zweiten Beacon-Nachricht Daten enthält, die verwendet werden, um dem UE, das sich in einer gegebenen Masche befindet, anzuzeigen, ob die i-te bestimmte RAT oder die i-te bestimmte Frequenz in der gegebenen Masche verfügbar ist oder nicht.

3. Verfahren nach Anspruch 2, wobei alle zweiten Beacon-Nachrichten die gleiche Größe haben und wobei die erste Beacon-Nachricht Daten aufweist, die die geographische Position und eine Größe der Masche, für die die zweite Beacon-Nachricht gedacht ist, anzeigen.

4. Verfahren nach Anspruch 2, wobei alle Maschen des geographischen Bereichs die gleiche Form und die gleiche Größe haben.

5. Verfahren nach Anspruch 1, wobei die zweite Beacon-Nachricht eine Kennnumer der ersten Beacon-Nachricht aufweist.

6. Verfahren nach Anspruch 1, wobei das UE die Referenzinformationen und die spezifischen Informationen, die mit den Referenzinformationen kombiniert werden sollen, speichert, die zweite Beacon-Nachricht, die Daten in Bezug auf die Masche, in der das UE sich aktuell befindet, enthält, decodiert, diese Daten speichert und eine neue RAT und/oder eine neue Frequenz in dieser Masche auswählt.

7. Basisstation zum Übertragen von Diensten an ein Benutzergerät UE in einem Bereich, der von mehreren Funkzugangstechnologien RATs abgedeckt wird, die mehrere Frequenzen verwenden, wobei der Bereich mehrere geographische Maschen aufweist, wobei jede Masche durch wenigstens eine RAT der mehreren RAT abgedeckt wird, und das UE verschiedene RAT-Fähigkeiten und Präferenzen hat und mehrere Frequenzen unterstützt, wobei die Basisstation aufweist:
- Einrichtungen zum Rundsenden von Referenzinformationen, die alle RATs, die in dem Bereich eingesetzt sind, und alle Frequenzen, die in dem Bereich verwendet werden, beschreiben, in einem ersten Beacon,
- Einrichtungen zum Rundsenden von spezifischen Informationen, die mit den Referenzinformationen kombiniert werden sollen, zum Beschreiben einer RAT, die in einer spezifischen Masche des Bereichs eingesetzt wird, und einer Frequenz, die in der spezifischen Masche verwendet wird, in der zweiten Beacon-Nachricht,
- Einrichtungen zum Aufnehmen einer geographischen Position des Bereichs und von Zeitstempeln der Übertragung für eine nächste erste Nachricht und für die zweite Beacon-Nachricht, die für die spezifische Masche gedacht sind, in die erste Beacon-Nachricht.

8. Basisstation nach Anspruch 7, wobei das Benutzergerät mit verschiedenen RAT-Fähigkeiten und Präferenzen konfiguriert ist, um Beacon-Dienste, die von der Basisstation übertragen werden, zu empfangen.

## Revendications

1. Procédé pour commander de façon optimale la synchronisation d'un équipement utilisateur, ci-après dénommé UE, vers un canal de balise transportant au moins un premier message de balise et un second message de balise, ledit UE itinérant dans une zone comprenant une pluralité de mailles, chaque maille étant couverte par au moins une technologie d'accès radio, RAT, parmi une pluralité de RAT utilisant plusieurs fréquences, ledit UE ayant diverses capacités et préférences de RAT et prenant en charge plusieurs fréquences,
ledit procédé comprenant les étapes :
- diffuser, dans le premier message de balise, d'informations de référence décrivant toutes les RAT déployées dans ladite zone et toutes les fréquences utilisées dans ladite zone,
- diffuser, dans le second message de balise, d'informations spécifiques à combiner avec lesdites informations de référence pour décrire une RAT déployée dans une maille spécifique de ladite zone et une fréquence utilisée dans ladite maille spécifique, ledit procédé comprenant l'étape consistant à inclure dans le premier message de balise, une position géographique de ladite zone et des estampilles temporelles d'une transmission pour un prochain premier message de balise et pour le second message de balise radiodiffusés dans ladite zone.

2. Procédé selon la revendication 1, dans lequel chacun dudit premier message de balise et dudit second message de balise comprend n champs successifs, et dans lequel chaque champ i, i = 1 à n, du premier message de balise contient un identifiant d'une i^{ème} RAT particulière ou d'une valeur d'une i^{ème} fréquence particulière disponible dans la zone couverte par le canal pilote cognitif, CPC, et chaque champ i, i = 1 à n, du second message de balise contient des données utilisées pour indiquer à l'UE situé dans une maille donnée si la i^{ème} RAT particulière ou la i^{ème} fréquence particulière est disponible ou non dans ladite maille donnée.

3. Procédé selon la revendication 2, dans lequel tous les seconds messages de balise ont la même taille, et dans lequel le premier message de balise comprend des données indiquant la position géographique et une taille de la maille à laquelle ledit second message de balise est destiné.

4. Procédé selon la revendication 2, dans lequel toutes les mailles de ladite zone géographique ont la même forme et la même taille.

5. Procédé selon la revendication 1, dans lequel le second message de balise comprend un numéro d'identification du premier message de balise.

6. Procédé selon la revendication 1, dans lequel l'UE stocke les informations de référence et les informations spécifiques à combiner avec lesdites informations de référence, décode le second message de balise contenant des données relatives à une maille où l'UE est actuellement situé, stocke lesdites données, et sélectionne une nouvelle RAT et/ou une nouvelle fréquence dans ladite maille.

7. Station de base pour transmettre des services à un équipement utilisateur, UE, dans une zone couverte par plusieurs technologies d'accès radio, RAT, utilisant diverses fréquences, ladite zone comprenant une pluralité de mailles géographiques, chaque maille étant couverte par au moins une RAT parmi ladite pluralité de RAT et l'UE ayant diverses capacités et préférences de RAT et prenant en charge plusieurs fréquences, ladite station de base comprenant :
- des moyens pour diffuser, dans un premier message de balise, des informations de référence décrivant toutes les RAT déployées dans ladite zone, et toutes les fréquences utilisées dans ladite zone,
- des moyens pour diffuser, dans un second message de balise, des informations spécifiques à combiner avec lesdites informations de référence pour décrire une RAT déployée dans une maille spécifique de ladite zone et une fréquence utilisée dans ladite maille spécifique, ladite station de base comprenant des moyens pour inclure, dans le premier message de balise, une position géographique de ladite zone et des estampilles temporelles d'une transmission pour un prochain premier message de balise et pour le second message de balise destinés à ladite maille spécifique.

8. Station de base selon la revendication 7, dans laquelle ledit équipement utilisateur ayant diverses capacités et préférences de RAT est configuré pour recevoir des services de balise transmis par la station de base.
